## Europäisches Patentamt

## European Patent Office

## Office européen des brevets

(11) Veröffentlichungsnummer: **0 205 170**
**A2**

(12) # EUROPÄISCHE PATENTANMELDUNG

(21) Anmeldenummer: 86107977.0

(22) Anmeldetag: 11.06.86

(51) Int. Cl.⁴: **F 16 L 19/08**

(30) Priorität: 13.06.85 DE 3521178

(43) Veröffentlichungstag der Anmeldung:
17.12.86 Patentblatt 86/51

(84) Benannte Vertragsstaaten:
CH DE FR GB IT LI

(71) Anmelder: Hewlett-Packard GmbH
Herrenberger Strasse 110
D-7030 Böblingen(DE)

(72) Erfinder: Berndt, Manfred, Dipl.-Ing.
Wiesenstrasse 27
D-7517 Waldbronn(DE)

(74) Vertreter: Schulte, Knud, Dipl.-Ing.
c/o Hewlett-Packard GmbH Europ. Patent- und
Lizenzabteilung Postfach 1430 Herrenberger Strasse 130
D-7030 Böblingen(DE)

(54) Druckdichtes Kupplungsstück für ein Rohr.

(57) Das Kupplungsstück (20) weist zwischen dem Dichtring (5) aus Kunststoff und der Schraubeinrichtung (10) eine auf dem Rohr (3) konische Form einnehmende Tellerfeder (8) auf. Die Tellerfeder (8) wird beim Zusammenschrauben des Kupplungsstücks (20) durch die Wirkung von Dichtring (5) und Schraubeinrichtung (10) abgeflacht, wobei sich ihr innerer Rand verengt und in die Außenoberfläche des Rohrs (3) einquetscht. Der enstehende Formschluß sichert das Rohr (3) gegen Auszugskräfte. Die Tellerfeder (8) ist in montiertem Zustand elastisch vorgespannt und fängt Vibrationen des Rohrs (3) sowie kaltes Fließen des Dichtrings (5) auf. Die Tellerfeder (8) kann gezahnt ausgebildet det sein. Zwischen Dichtring (5), Tellerfeder (8) und Schraubeinrichtung (10) können Metallscheiben (7, 9) vorgesehen sein. Der Dichtring (5) kann aus einem Fluorpolymer hergestellt sein.

Fig.1

Hewlett-Packard GmbH

Int. Az.: EP 90                    - 1 -

2. Juni 1986

0205170

DRUCKDICHTES KUPPLUNGSSTÜCK FÜR EIN ROHR

BESCHREIBUNG

Die Erfindung betrifft ein druckdichtes Kupplungsstück für ein Rohr nach dem Oberbegriff des Anspruchs 1.

Derartige Kupplungsstücke sind bekannt aus der Broschüre "Miconns" von R. Kaiser, verlegt im Institut für Chromatographie Bad Dürkheim 1981.

Aus dem bekannten Kupplungsstück kann das Rohr mit verhältnismäßig geringem Kraftaufwand herausgezogen werden, weil bei der Montage lediglich ein Reibschluß zwischen dem Dichtring und dem Rohr erreicht wird.

Demgegenüber wird durch die kennzeichnenden Merkmale des Anspruchs 1 die Aufgabe gelöst, bei einem Kupplungsstück nach dem Oberbegriff den Widerstand gegen ein Herausziehen des Rohrs wesentlich zu erhöhen.

Nach Anspruch 1 ist vorgesehen, daß zwischen dem Dichtring und der Schraubeinrichtung eine Tellerfeder aus einem härteren Material als das Rohr in konischer Form angeordnet wird, deren innerer Rand beim Zusammenschrauben des Kupplungsstücks durch die gemeinsame Wirkung des Dichtrings und der Schraubeinrichtung in die Oberfläche des Rohrs eingequetscht wird. Eine solche Tellerfeder bietet dem Dichtring eine große Anlegefläche, so daß beim Zusammenschrauben die zum Einquetschen der Tellerfeder in das Rohr erforderliche Kraft erreicht wird, ohne daß der Dichtring durch die dabei auftretende Druckbelastung beschädigt wird.

Im einzelnen ist nach Anspruch 1 weiter vorgesehen, daß die Tellerfeder entweder konisch ausgebildet oder so bemessen ist, daß sie sich beim Aufschieben auf das Rohr konisch verformt. Ihr sich verengender Teil ist bei der Montage dem Kupplungsgehäuse zugewandt anzuordnen. Am Dichtring und an der Schraubeinrichtung sind Anlegeflächen für die Tellerfeder vorgesehen, die sie beim Anziehen der Schraubeinrichtung abflachen. Hierbei wird der innere Rand der Tellerfeder zum Formschluß in die Oberfläche des Rohrs eingepreßt, wodurch eine gegenüber reinem Reibschluß am Dichtring wesentlich verbesserte Rückhaltung des Rohres im Kupplungsstück erzielt wird.

Mit solchen Kupplungsstücken können insbesondere metallische Rohre zugfest verbunden werden; darüber hinaus können solche Kupplungsstücke auch zur Verbindung von Rohren aus Kunststoff verwendet werden, weil diese noch einfacher zu verformen sind als metallische Rohre.

Bei metallgedichteten Kupplungsstücken ist das Erzeugen einer formschlüssigen Verbindung zu einem metallischen Rohr bei der Montage des Kupplungsstücks schon seit langer Zeit bekannt (DE-PS 12 32 415). Der bei diesen Kupplungsstücken aus Metall bestehende Dichtring weist an seinem hinteren Ende eine sich nach innen verengende, spitz zulaufende konische Ausnehmung auf. Zum Erfassen des Rohrs ist ein hinterer Schneidring aus Metall vorgesehen, der durch eine Überwurfmutter in diese konische Ausnehmung hineingedrängt wird, sich dabei verengt und die Wandung des Rohrs radial zum Formschluß nach innen quetscht. Obwohl seit Bekanntwerden dieser Verbindungstechnik vielfach Versuche unternommen worden sind, das Prinzip der Verformung von Schneidring und Rohr bei der Montage auf kunststoffgedichtete Kupplungsstücke zu übertragen, scheiterten diese bisher an der zu geringen Druckfestigkeit der Kunststoffdichtung. Die Kraft zur Verformung des Schneidrings und des Rohrs wird aus einer Druckbelastung des Dichtrings gewonnen, die bei den bekannten Kupplungsstücken die für Kunststoffdichtringe zulässige Grenze bei weitem überschreiten würde, was zu Rißbildung und Undichtigkeiten führt.

Die folgenden bevorzugten Ausführungsformen der Erfindung sind in den Unteransprüchen gekennzeichnet:

Nach Anspruch 2 kann die Tellerfeder zur Bildung radial einwärts gerichteter Zähne geschlitzt sein. Dies verkleinert die dem Rohr zugewandte Fläche der Tellerfeder und erleichtert damit das Eindringen der Tellerfeder in die Oberfläche des Rohrs beim Anziehen der Schraubeinrichtung. Ein ähnliches Ergebnis wäre auch durch Verringerung der Materialstärke der Tellerfeder in Rohrnähe zu erreichen. Bei gezahnter Ausbildung ist die Tellerfeder leicht durch ein Ätzverfahren
herstellbar.

Nach Anspruch 3 kann bei gezahnter Ausbildung der Tellerfeder eine
Metallscheibe zwischen ihr und dem Dichtring vorgesehen sein, so daß
sich die Zähne der Tellerfeder nicht in den Dichtring einpressen. Dies
schützt einerseits den Dichtring vor einer Beschädigung und unterstützt andererseits die Abflachung der Tellerfeder beim Anziehen der
Überwurfmutter, weil sich dem Dichtring statt der flächenmäßig kleineren Zähne die gesamte Fläche der Metallscheibe als Anlagefläche bietet
und die Metallscheibe die entstehenden Kräfte auf die Zähne der Tellerfeder überträgt.

Nach Anspruch 4 kann zur Druckverteilung eine Metallscheibe zwischen
der Schraubeinrichtung und der Tellerfeder vorgesehen sein.

Ein für die Verwendung in der Flüssigkeitschromatographie besonders
geeigneter Werkstoff für den Dichtring ergibt sich aus Anspruch 5. Die
auf diesem Gebiet verwendeten Lösungsmittel verschiedenster Art erfordern einen chemisch möglichst inerten Dichtring. Versuche mit verschiedenen Werkstoffen und als besonders kritisch bekannten Lösungsmitteln und Lösungsmittelgemischen haben gezeigt, daß der beanspruchte
Werkstoff Polytetrafluoräthylen mit perfluorierten Alkoxyseitenketten
einen optimalen Kompromiß bezüglich mechanischer und chemischer Eigenschaften bietet.

Die Erfindung wird nachfolgend anhand von Ausführungsbeispielen unter
Bezugnahme auf die zugehörigen Zeichnungen im einzelnen näher beschrieben und erläutert.

Fig. 1  zeigt ein Kupplungsstück für ein Rohr teilweise im Längsschnitt in vormontiertem Zustand;

Fig. 2  zeigt einen Ausschnitt des in Fig. 1 gezeigten Kupplungsstückes im Schnitt;

Fig. 3  zeigt den in Figur 2 dargestellten Ausschnitt des Kupplungsstückes nach Einschrauben des Schraubstopfens um einen Teil
        seines Weges;

Hewlett-Packard GmbH
Int. Az.: EP 90                      - 4 -

Fig. 4  zeigt den in Figur 2 dargestellten Ausschnitt des Kupplungsstückes in fertigmontiertem Zustand;
Fig. 5A zeigt einen Schnitt durch eine erste Ausführungsform einer
         Tellerfeder zur Verwendung in dem Kupplungsstück nach Figur 1;
Fig. 5B zeigt eine Flächenansicht der Tellerfeder nach Figur 5A;
Fig. 5C zeigt eine Flächenansicht einer zweiten Ausführungsform einer
         Tellerfeder zur Verwendung in dem Kupplungsstück nach Figur 1;
Fig. 6  zeigt den in Fig. 1 teilweise geschnitten dargestellten Dichtring in Einzeldarstellung.

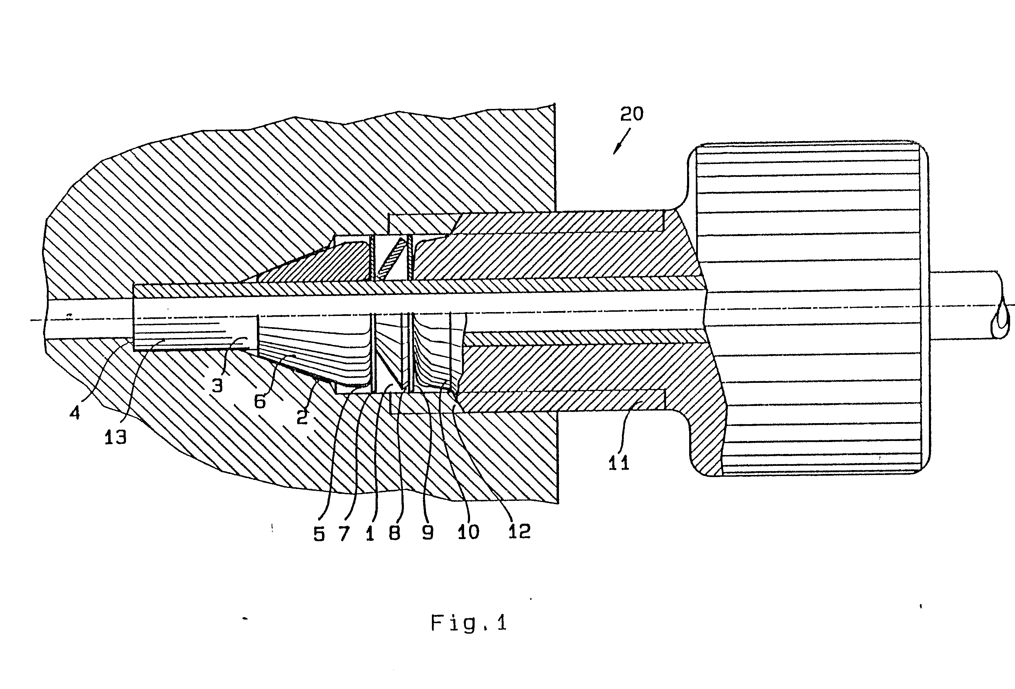

In Fig. 1 ist ein Kupplungsstück 20 für ein Rohr 3 teilweise im Längsschnitt in vormontiertem Zustand gezeigt. Eine Bohrung 1 mit einer
konischen Einlauffläche 2 nimmt das metallische Rohr 3 auf, das an
eine in der Bohrung 1 vorgesehene Schulter 4 anstößt. Auf dem Rohr 3
ist ein Dichtring 5 aus Kunststoff mit einem im wesentlichen konischen
Nasenteil 6 angeordnet. Auf den Dichtring 5 folgen eine erste Metallscheibe 7, eine stählerne Tellerfeder 8 mit konischer Form, eine zweite Metallscheibe 9 und ein Schraubstopfen 10 aus Kunststoff mit einem
Außengewinde 11, das in ein Innengegewinde 12 der Bohrung 1 eingreift.
Die Metallscheiben 7 und 9 sind einfache glatte Metallscheiben. Die
Tellerfeder 8 ist im wesentlichen eine konisch verformte flache Scheibe, deren zulaufendes Ende in die Bohrung 1 hineinweist.

Der in Figur 1 gezeigte vormontierte Zustand kann erreicht werden,
indem zuerst von dem an die Schulter 4 anstoßenden Ende 13 des Rohrs
aus nacheinander der Schraubstopfen 10, die zweite Metallscheibe 9,
die Tellerfeder 8, die erste Metallscheibe 7 und der Dichtring 5 auf
das Rohr 3 aufgeschoben werden, danach das Rohr 3 mit den darauf angeordneten Elementen bis zur Schulter 4 in die Bohrung 1 eingeführt wird
und schließlich der Schraubstopfen 9 in das Gewinde 12 eingeschraubt
wird, bis die Elemente des Kupplungsstücks aneinanderliegen, ohne daß
wesentliche Druckkräfte ausgeübt werden.

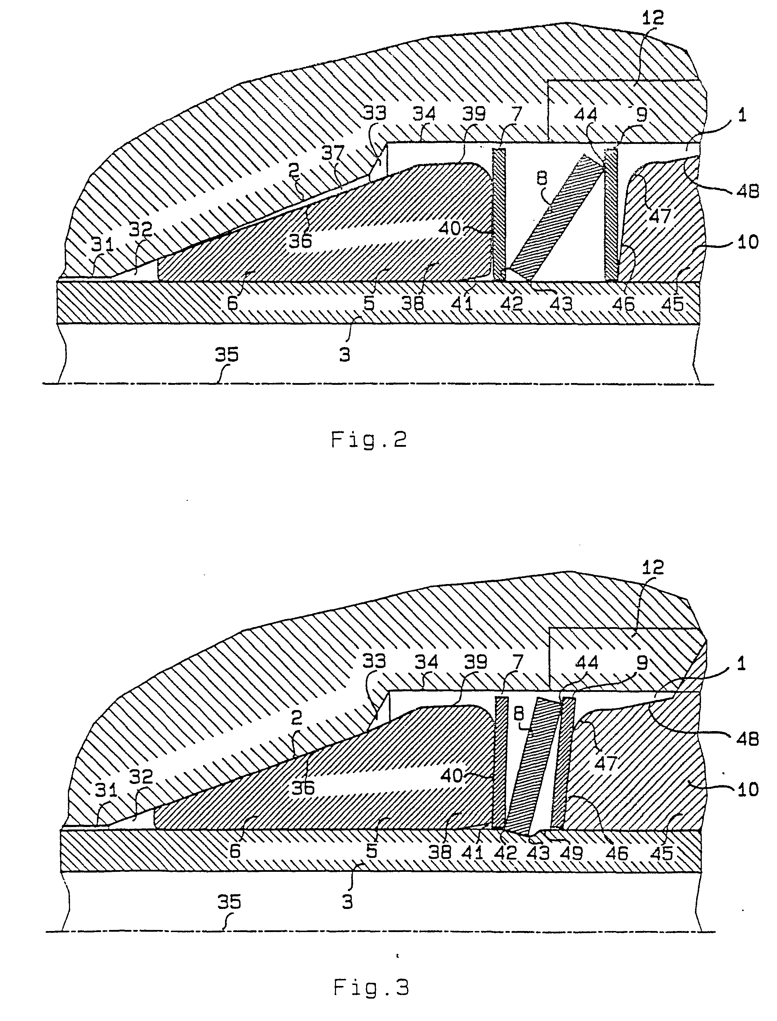

Ein vergrößerter Ausschnitt der Figur 1 ist in Figur 2 im Schnitt dargestellt, der besseren Übersicht wegen allerdings nur die in Figur 1
oberhalb der Symmetrieachse liegende Hälfte der gezeigten Elemente.
Das Ende des Rohrs 3 befindet sich im inneren Teil 31 der Bohrung 1,

der nur wenig weiter als der Außendurchmesser des Rohrs 3 ist. An den inneren Teil 31 schließt sich eine konische Erweiterung 32 an, deren Wand die Einlauffläche 2 bildet. Nach einer bevorzugten Ausführungsform der Erfindung beträgt der Scheitelwinkel des konischen Teils 40°, die Mantelfläche 2 des Konus 32 schließt also mit der Zentralachse 35 der Bohrung einen Halbwinkel von 20° ein. Der konische Teil 32 der Bohrung 1 geht vermittels eines Übergangs 33 in ein zylindrisches Teilstück über. Der innere Teil dieses Zylinders hat eine glatte Wand 34, der äußere Teil ist mit einem Innengewinde 12 versehen.

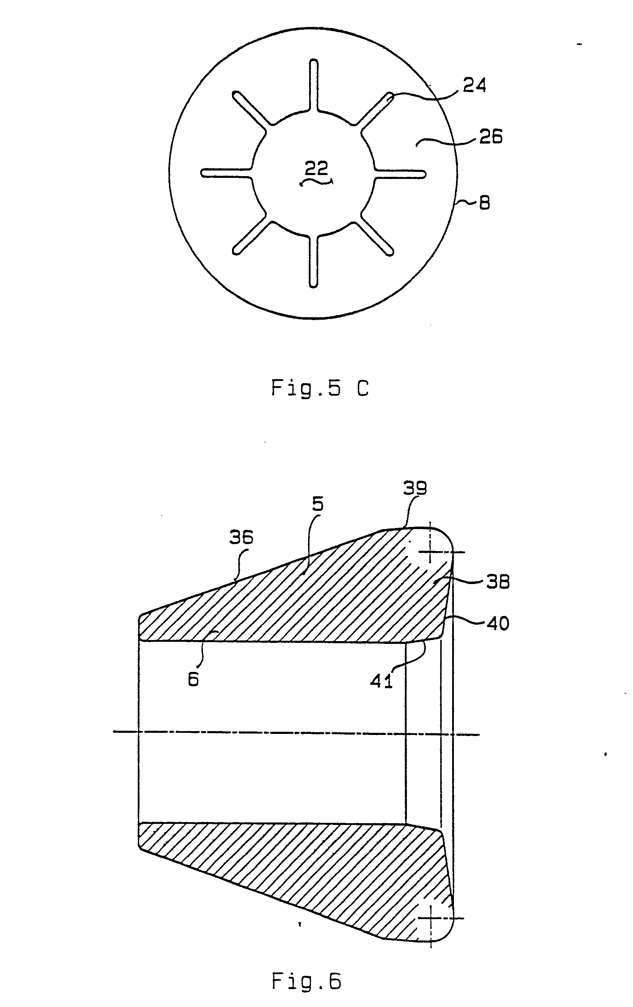

Auf dem Rohr angebracht ist der in Figur 6 im Schnitt dargestellte Dichtring 5, dessen konischer Nasenteil 6 sich im konischen Teil 32 der Bohrung 1 befindet. Nach der bevorzugten Ausführungsform der Erfindung beträgt der Scheitelwinkel des Nasenteils 6 39°, seine Mantelfläche 36 schließt also mit der Zentralachse einen Winkel von 19,5° ein. Dementsprechend ist zwischen der Einlauffläche 2 und dem Nasenteil des Dichtrings ein Luftspalt 37 vorhanden. Im vormontierten Zustand hat der Dichtring nur auf einem Kreis an seiner Spitze Kontakt zur Einlauffläche 2.

An den Nasenteil des Dichtrings 5 schließt sich ein Endstück 38 an, das in Kontakt zu der ersten Metallscheibe 7 steht. Das Endstück 38 ist begrenzt durch eine abgerundete äußere Fläche 39, eine hintere Fläche 40 und eine innere Fläche 41. Die hintere Fläche 40 ist schwach konisch in den Dichtring eingesenkt und schließt nach der bevorzugten Ausführungsform einen Winkel von 2° mit der Senkrechten zur Zentralachse 35 ein. Die innere Fläche 41 ist fast zylindrisch und schließt nach der bevorzugten Ausführungsform einen Winkel von 10° mit der Zentralachse 35 ein. Diese konische Erweiterung 41 der Zentralbohrung des Dichtrings 5 erleichtert dessen Aufschieben auf das Rohr 3.

Auf den Dichtring 5 folgt die erste Metallscheibe 7, deren Innendurchmesser geringfügig größer ist als der Außendurchmesser des Rohrs 3, und deren Außendurchmesser etwas größer ist als der Außendurchmesser des Endstücks des Dichtrings.

Hewlett-Packard GmbH
Int. Az.: EP 90                    - 6 -

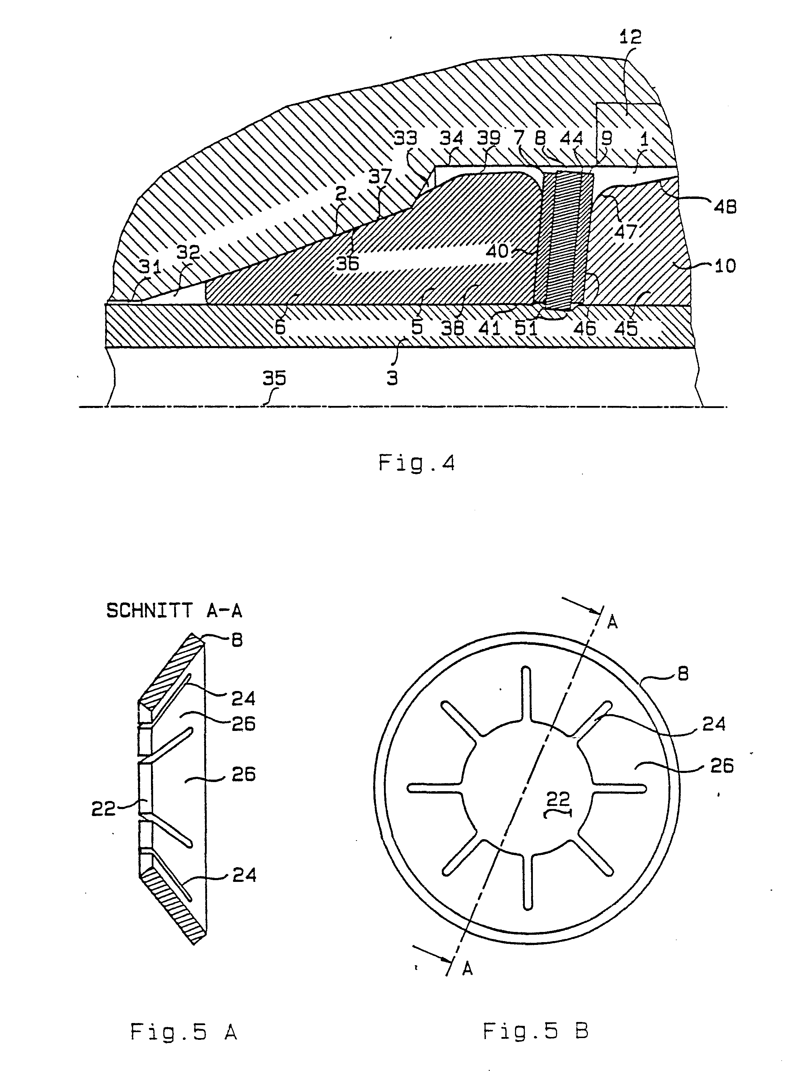

Zwischen der ersten Metallscheibe 7 und der zweiten Metallscheibe 9 befindet sich die auf das Rohr 3 aufgeschobene leicht trichterförmige Tellerfeder 8. Ihre äußere Vorderkante 42 liegt an der ersten Metallscheibe 7 an, und ihre innere Vorderkante 43 liegt je nach Ausführungsform der Tellerfeder entweder federnd außen auf dem Rohr 3 auf oder befindet sich in sehr geringem Abstand von der Außenoberfläche des Rohrs. Dies wird nachfolgend noch näher erläutert. Die innere Hinterkante 44 der Tellerfeder 8 liegt an der zweiten Metallscheibe 9 an. Nach der bevorzugen Ausführungsform der Erfindung ist die Tellerfeder so bemessen, daß sie auf dem Rohr kegelige Form mit einem Scheitelwinkel von etwa 120° besitzt. Andere Bemessungen sind jedoch auch möglich, solange die Konizität ausreicht, um beim Abflachen der Tellerfeder eine zum Erfassen des Rohres ausreichende Verengung ihrer Durchgangsöffnung 22 (Siehe Fig. 5A, 5B und 5C) zu bewirken. Dies wird noch nachfolgend erläutert.

An die zweite Metallscheibe 9 schließt sich der Schraubstopfen 10 an. Sein vorderes Ende 45 ist schwach konisch zugespitzt. Die der zweiten Metallscheibe 9 zugewandte Vorderfläche 46 des Schraubstopfens schließt nach der bevorzugten Ausführungsform der Erfindung einen Winkel von 6° mit der Senkrechten zur Zentralachse 35 ein. An die Vorderfläche 46 schließt sich über einen abgerundeten Übergang 47 eine Mantelfläche 48 an, die nach der bevorzugten Ausführungsform mit der Zentralachse 35 einen Winkel von 15° einschließt.

In Figur 3 ist der gleiche Ausschnitt der Figur 1 in dem Zustand dargestellt, der sich durch Einschrauben des Schraubstopfens 10 um etwa die Hälfte seines Weges ergibt. Über die hintere Metallscheibe 9 übt der Schraubstopfen eine Kraft auf die innere Hinterkante 44 der Tellerfeder 8 aus, die dazu tendiert, die Tellerfeder abzuflachen. Die zweite Metallscheibe ist durch den Druck des Schraubstopfens kegelig verformt und liegt an dessen Vorderfläche 46 an. Die erste Metallscheibe ist durch die Druckkraft, die auf sie durch die äußere Vorderkante 42 der Tellerfeder 48 übertragen wird, ebenfalls kegelig verformt und liegt bündig an der schwach konisch einlaufenden Rückfläche 40 des Dichtrings 5 an. Auch der Dichtring selber ist durch die auf ihn übertragene Druckkraft in mehrfacher Hinsicht verformt.

Zum einen ist der Dichtring 5 um eine geringe Strecke in den kegeligen Teil 32 der Bohrung 1 hineingewandert, wobei sich seine Mantelfläche 36 an die Mantelfläche 2 des Bohrungsgekels angelegt hat. Dieses Anlegen geschieht gleitend während des Einschraubens des Schraubstopfens 10. Zunächst besteht nur eine Linienberührung zwischen Bohrungskegel 32 und Dichtring 5 an der Spitze des Dichtrings. Bei zunehmender Druckkraft auf den Dichtring ergibt sich an der Berührungslinie eine Materialkompression, die ein Hineingleiten des Dichtrings in den Bohrungskegel ermöglicht, und aus der Linienberührung wird eine Flächenberührung, wobei die Trennungslinie zwischen Dichtring und Bohrungskegel mit zunehmendem Druck nach außen wandert. Der Dichtring schmiegt sich so von innen nach außen an die Wand des Bohrungskegels an, wobei der Punkt höchster Kompression an der Spitze des Dichtrings liegt.

Zum anderen ist auch das Endstück 38 des Dichtrings durch die Druckwirkung der ersten Metallscheibe komprimiert. Die Tellerfeder drückt nahe am Innenrand auf die erste Metallscheibe; die Druckkraft wirkt dort direkt und wird nach außen hin durch das elastische Verhalten der Scheibe untersetzt. Entspreched wird die Konizität der Rückfläche 40 des Dichtrings durch den Druck der ersten Metallscheibe 7 erhöht und Material nach außen gedrängt. Dies unterstützt noch die durch die allgemeine Volumenkompression bewirkte Vergrößerung der radialen Ausdehnung des Dichtrings 5.

Die Tellerfeder 8, die nach Figur 2 elastisch federnd oder mit sehr geringem Spiel auf der Außenfläche des Rohrs 3 auflag, erfährt durch die Abflachung eine Verringerung ihres Innendurchmessers. Sie ist aus einem härteren Material zu fertigen als das Rohr 3, so daß sie dazu in der Lage ist, sich in deren Oberfläche hineinzugraben. Dies ist in Figur 3 bei 49 dargestellt. Durch das Einschrauben des Schraubstopfens 10 und die Kompression und Verschiebung des Dichtrings 5 hat sich die Tellerfeder 8 in die Bohrung 1 hinein verschoben und dabei in die Oberfläche des Rohrs 3 eingepreßt. Das verdrängte Material wird vor der Tellerfeder hergeschoben. Aus der anfänglichen Linienberührung zwischen der Tellerfeder und dem Rohr ist eine Flächenberührung geworden. Die plastische Verformung des Rohrs geschieht im wesentlichen lokal, weil wegen des kleinen Krümmungsradius der Kante der Tellerfeder die Berührungsfläche sehr klein ist.

In dieser Hinsicht unterscheidet sich das erfindungsgemäße Kupplungsstück wesentlich von den bekannten Kupplungsstücken mit metallischem Dichtring. Dort ist ein Schneidring zum Erfassen des Rohrs vorgesehen, dessen Kontaktfläche zum Rohr axial wesentlich weiter ausgedehnt ist. Beim Montieren schiebt sich dieser Schneidring unter ein rückwärtiges Teil des metallischen Dichtrings, wird dadurch nach innen gedrückt und verformt die gesamte Wandung des Rohrs radial einwärts. Ein axialer Transport von Wandmaterial des Rohrs findet kaum statt, und die Verformungsvorgänge erfordern Druckkräfte, die einen Dichtring aus einem Fluorpolymer oder anderen geeigneten Kunststoffen zerstören würden. Die Berührungsfläche zwischen Schneidring und Rohr und der Krümmungsradius dieser Fläche ist bei dem erfindungsgemäßen Kupplungsstück wesentlich kleiner, und die Tellerfeder transportiert beim Einpressen in das Rohr das verdrängte Material nicht nur radial einwärts, sondern schiebt es auch axial vor sich her. Die auf den Dichtring wirkende Kraft wird zur Verformung kleinerer Bereiche umgesetzt und kann deshalb kleiner sein, was erst die Verwendung eines Dichtrings aus Kunststoff ermöglicht.

In Figur 4 ist der gleiche Ausschnitt wie in Figur 2 in fertigmontiertem Zustand des Kupplungsstücks gezeigt. Der Schraubstopfen 10 ist so weit in die Bohrung eingeschraubt, daß die Tellerfeder 8 flächig an den Metallscheiben 7 und 9 anliegt. Bei der bevorzugten Ausführungsform des Kupplungsstücks, bei der die hintere Fläche 40 des Dichtrings einen Winkel von $2^o$ und die Vorderfläche 46 des Schraubstopfens einen Winkel von $6^o$ mit der Senkrechten zur Zentralachse 35 einschließt, stellt sich im fertigmontierten Zustand ein Winkel von etwa $4^o$ zwischen dieser Senkrechten und den aneinanderliegenden Funktionselementen 7, 8 und 9 ein. Wie bei 51 dargestellt, ist durch die Verformung der Tellerfeder deren Innendurchmesser gegenüber Figur 3 noch weiter verringert und die Tellerfeder ist weiter in die Bohrung 1 hineingewandert. Die Stauchung des Dichtrings hat diesen verkürzt, weiter in den Konus 32 hineingepreßt und den Außendurchmesser seines Endstücks noch vergrößert.

Bei der bevorzugten Ausführungsform ist die Verformung der Tellerfeder 8 so weitgehend, daß sie sich in der letzten Montagephase noch plastisch verformt. Auch nach dieser plastischen Verformung ist sie aber in der Endkonfiguration noch elastisch vorgespannt, wie sie es auch ohne plastische Verformung wäre. Ihr Innenrand drängt in die ursprüngliche Form zurück und übt dabei eine in die Bohrung 1 hineingerichtete Kraft auf das Rohr 3 aus, weil durch die Materialverdrängung der Tellerfeder 8 ein Formschluß der Tellerfeder zum Rohr in dem in der Figur mit 51 bezeichneten Bereich besteht. Vor der Tellerfeder 8 ist Wandmaterial des Rohrs 3 aufgeworfen, und die Tellerfeder ist radial in das Rohr eingesenkt. Diese formschlüssige Verbindung ist bei der bevorzugten Ausführungsform zugfest gegen Auszugskräfte am Rohr bis zu 250 N, eine etwa fünffache Verbesserung gegenüber der bei vergleichbarer Geometrie mit reinem Reibschluß erreichbaren Zugfestigkeit.

Formschluß und elastische Vorspannung der Tellerfeder sind auch bei Vibrationsbelastung des Rohrs für die Dauerfestigkeit und dauerhafte Dichtigkeit des Kupplungsstücks 20 vorteilhaft. Das Rohr 3 kann sich in gewissen Grenzen dem Dichtring 5 gegenüber bewegen, ohne daß der Dichtring dabei enlastet und damit das Kupplungsstück undicht würde. Bei einer reibschlüssigen Verbindung würde bei jeder Relativbewegung zwischen Dichtring und Rohr durch den Übergang von Haftreibung zur geringeren Gleitreibung die Gefahr einer Lockerung des Rohrs bestehen.

Die innerhalb des fertigmontierten Kupplungsstücks weiterbestehenden elastischen Spannungen bewirken außerdem eine verbesserte Sicherung der Rohrverbindung bei Kaltfluß des Kunststoffmaterials, aus dem Dichtring und Schraubstopfen bestehen. Beim Wegfließen des Kunststoffes, aus dem der Schraubstopfen besteht, beispielsweise in Spalte oder nicht ausgefüllte Nischen des Kupplungsstücks, federt die Tellerfeder nach, wobei aber der Formschluß zum Rohr und damit die Rückhaltung des Rohrs im Kupplungsstück bestehen bleibt. Das Rohr wird somit durch das Fließen des Kunststoffs nicht frei beweglich und es besteht insbesondere auch keine erhöhte Gefahr des Herauskriechens des Rohrs bei Vibration und Erschütterung.

Dies ist insbesondere für eine Anwendung des Kupplungsstücks in der Flüssigkeitschromatographie vorteilhaft, weil dort aus chemischen Gründen bevorzugt Fluorpolymere eingesetzt werden, die leicht kalt fließen. Der Dichtring muß für diese Anwendungen chemisch möglichst reaktionsträge sein, insbesondere auch organischen Lösungsmitteln gegenüber. Es wurden daher Untersuchungen zur Quellung, Löslichkeit und Adsorbanz verschiedener Fluorpolymere durchgeführt. Es waren dies die folgenden Werkstoffe (die verwendeten Abkürzungen sind in der Kunststofftechnik allgemein bekannt): PTFE, PTFE + 20% Glsfaserverstärkung, FEP, PTFE-PFA, PTFE-PFA + 20% Glasfaserverstärkung, PTFE-PFA+15% Kohlefaserverstärkung, PCTFE und ETFE.

Folgende Lösungsmittel wurden verwendet (alle Angaben in Volumenprozenten): 90% Wasser + 10% Essigsäure; 99% Wasser + 1% Trifluoressigsäure; 48% Methanol + 2% Triäthylamin + 50% Wasser (pH=12); gleiche Teile Methanol und Wasser mit Phosphorsäurezusatz ad pH=2,3; gleiche Teile Acetonitril und Wasser mit Schwefelsäurezusatz ad pH=2,3; 100% Tetrachloräthylen; 100% Hexan; 100% Isopropanol; 100% Tetrahydrofuran; 100% Dichlormethan; 100% Diäthylamin; 100% Acetonitril.

Ein Optimum in Bezug auf geringe Quellung, geringe Löslichkeit und Adsorbanz sowie geringen Kaltfluß ergab sich aus diesen Versuchen für das Material PTFE-PFA, ein Polytetrafluoräthylen mit perfluorierten Alkoxyseitenketten.

Das vorgestellte Kupplungsstück ist besonders zur Verwendung bei Dauerdrücken zwischen 1 Bar und 30 Bar geeignet und weist dort gegenüber den bekannten hochdruckfesten Kupplungsstücken wesentliche Kostenvorteile und eine verbesserte Lecksicherheit auf. Es werden aber auch kurzzeitige Druckspitzen durch die elastische Vorspannung von Tellerfeder und Dichtring aufgefangen, bei der bevorzugten Ausführungsform Druckspitzen bis zu 200 Bar mit einer Dauer von 100-200 ms. Die Druckfestigkeit hängt von der Materialauswahl für Dichtring, Tellerfeder und Schraubstopfen ab. Mit zäheren und/oder härteren Werkstoffen werden allgemein höhere Druckfestigkeiten erreicht als mit nachgiebigeren/weicheren Werkstoffen. Die durch den Druck im Rohr erzeugten, Rohr und Dichtring aus dem Kupplungsstück drängenden Kräfte erhöhen sich mit dem Durchmesser des Rohrs, was bei der Dimensionierung der Einzelteile zu berücksichtigen ist.

Bei der bevorzugten Ausführungsform beträgt der Außendurchmesser des Rohrs 1/16 Zoll oder 1,58 mm. Das vorgestellte Prinzip kann jedoch auch auf Rohre größeren oder kleineren Außendurchmessers angewendet werden. Der Dichtring und der Schraubstopfen aus Kunststoff können mit geringen Kosten im Spritzgußverfahren hergestellt werden. Die bekannten Kupplungsstücke erfordern bei der Montage große Sorgfalt zum Vermeiden eines Überdrehens, während bei dem vorgestellten Kupplungsstück der fertigmontierte Zustand anhand eines höheren Widerstandes gegen das weitere Anziehen des Schraubstopfens erkannt wird.

Bei der bevorzugten Ausführungsform des Kupplungsstücks ist als Schraubstopfen 10 eine Kunststoffschraube mit einer Zentralbohrung für den Durchgang des Rohrs vorgesehen; statt dessen könnte auch eine Metallschraube verwendet werden, wobei gegebenenfalls deren Vorderfläche in einem leicht veränderten Winkel zur Senkrechten auf die Zentralachse stehen müßte. Der Fachmann kann auch die Scheitelwinkel der Bohrung 32, des Dichtrings 5 und der Tellerfeder 8 in Abhängigkeit von den verwendeten Materialien für eine bestimmte Anwendung geringfügig verändern oder andere Variationen der Detailgeometrie vornehmen, die im Rahmen allgemein üblicher konstruktiver Anpassung an die Erfordernisse des Einzelfalls liegen.

Zwei verschiedene Ausführungsformen der Tellerfeder sind in den Figuren 5A bis 5C dargestellt. Bei der in den Figuren 5A und 5B gezeigten Ausführungsform ist die Tellerfeder 8 eine kegelig ausgebildete Stahlscheibe (ein Trichter) mit einer zentralen Öffnung 22 für das Rohr. Von der Öffnung 22 ausgehende radiale Schlitze 24 teilen den inneren Teil der Tellerfeder in radial einwärts gerichtete Zähne 26 auf. Der Durchmesser der Öffnung 22 ist an ihrer engsten Stelle geringfügig größer als der Außendurchmesser des Rohrs 3, so daß die Tellerfeder ohne weiteres auf das Rohr aufgeschoben werden kann. Der Durchmesser der Öffnung 22 ist zusammen mit der Materialstärke der Tellerfeder so bemessen, daß die Tellerfeder beim Fertigmontieren des Kupplungsstücks 20 abgeflacht werden kann und dabei am Rohr 3 angreift.

Bei der in Figur 5C gezeigten Ausführungsform ist die Tellerfeder 8 eine flache Stahlscheibe, ebenfalls mit einer zentralen Öffnung 22 für das Rohr 3 und einer Anzahl radialer Schlitze 24 zum Bilden radial einwärts gerichteter Zähne 26. Der Durchmesser der Öffnung 22 ist hier um einen geringen Betrag kleiner als der Außendurchmesser des Rohrs 3 und zusammen mit der Materialstärke bzw. Dicke der Tellerfeder 8 so bemessen, daß sie unter Verformung zu der in Figur 1 gezeigten kegeligen Form auf das Rohr 3 aufgeschoben werden kann.

Beide Ausformungen der Tellerfeder mit Zähnen erleichtern deren Verformung beim Zusammenschrauben des Kupplungsstücks 20 bzw. beim Aufschieben der Tellerfeder auf das Rohr 3, weil sich die einzelnen Zähne 26 elastisch gegeneinander verbiegen können. ohne daß ein Materialfluß erforderlich ist. Auch die in Figur 5C gezeigte flache Tellerfeder kann in dieser Ausführungsform leicht von Hand auf das Rohr 3 aufgeschoben werden. Es wäre jedoch bei geringerer Materialstärke auch eine Ausführung der Tellerfeder 8 in beiden Varianten (kegelig bzw. flach) ohne die Zähne 26 möglich; in diesem Fall muß beim Zusammenschrauben des Kupplungsstücks 22 zum Abflachen der Tellerfeder deren Schubspannung überwunden werden, so daß ein ausreichender Materialfluß erreicht wird. Ebenso müßte beim Aufschieben der flachen Tellerfeder 8 auf das Rohr 3 eine zur plastischen Verformung ausreichende Kraft aufgewendet werden. Gegebenenfalls ist hierfür vorzusehen, daß die flache Tellerfeder zum Aufschieben in ein Werkzeug mit einer konischen Bohrung eingelegt wird, das ihre Verformung unterstützt, und daß das Rohr beim Aufschieben der Tellerfeder beispielsweise mit einer Zange gehalten wird.

Figur 6 zeigt einen Längsschnitt durch den in Figur 1 teilweise geschnitten gezeigten Dichtring 5. Die Bezugszeichen sind schon im Zusammenhang mit Figur 2 erklärt worden. Der Außendurchmesser des Endstücks 38 des Dichtrings ist vorteilhaft so zu bemessen, daß er bei der Montage nicht die Wand 34 der zylindrischen Bohrung berührt. Bei dieser Dimensionierung bleibt der Dichtring beim Öffnen eines bereits montierten Kupplungsstücks nicht in der Bohrung stecken, sondern kann mit dem Rohr aus der Bohrung entfernt werden. Der Unterschied in den Scheitelwinkeln des konischen Teils 32 der Bohrung und der Mantelfläche 36 des Dichtrings unterstützt das Lösen des Dichtrings aus der Bohrung, weil er bei Entlastung zurückfedert und sich dabei der bereits beschriebene Luftspalt 37 wiederherstellt.

Das vorgestellte Kupplungsstück kann im übrigen mehrfach demontiert und erneut montiert werden. Bei der Demontage haftet die Tellerfeder 8 auf dem Rohr. Sie wird nicht ersetzt, sondern bei erneuter Montage wieder elastisch vorgespannt, ohne daß der Formschluß zum Rohr verloren geht. Der Dichtring kann im allgemeinen auch mehrfach verwendet oder bei Bedarf leicht ersetzt werden.

0205170

PATENTANSPRÜCHE

1. Druckdichtes Kupplungsstück für ein Rohr, insbesondere für ein metallisches Rohr, mit einem Kupplungsgehäuse, das eine Bohrung zur Aufnahme des Rohrs aufweist, mit einem auf das Rohr passenden Dichtring aus Kunststoff und einer mit dem Kupplungsgehäuse verschraubbaren Schraubeinrichtung, die beim Anziehen den Dichtring zur Abdichtung zwischen dem Rohr, dem Dichtring und dem Kupplungsgehäuse in Richtung zum Kupplungsgehäuse preßt, dadurch g e k e n n z e i c h n e t , daß zum Herstellen einer formschlüssigen Verbindung zwischen dem Kupplungsstück (20) und dem Rohr (3)

- eine zwischen dem Dichtring (5) und der Schraubeinrichtung (10) auf dem Rohr (3) anzuordnende Tellerfeder (8) vorgesehen ist, die aus einem Metall größerer Härte als das Rohr (3) besteht,

- die Tellerfeder (8) konisch ausgebildet (Fig. 5A, 5B) oder derart bemessen ist, daß sie sich beim Aufbringen auf das Rohr (3) konisch verformt, wobei das sich verengende Ende (42, 43) der Tellerfeder (8) dem Kupplungsgehäuse zugewandt anzuordnen ist,

- der Dichtring (5) und die Schraubeinrichtung (10) derart mit Anlegeflächen (40, 46) für die Tellerfeder (8) versehen sind, daß die Tellerfeder (8) beim Anziehen der Schraubeinrichtung (10) abgeflacht wird, und

- der Innendurchmesser der Tellerfeder (8) derart bemessen ist und der dem Rohr (10) zugewandte Rand (42, 43) der Tellerfeder (8) derart ausgebildet ist, daß die Tellerfeder (8) bei ihrer Abflachung durch das Anziehen der Schraubeinrichtung (10) die Oberfläche des Rohres (3) plastisch zum Formschluß verformt (49, 51).

2. Kupplungsstück nach Anspruch 1, dadurch gekennzeichnet, daß die Tellerfeder (8) zum Bilden von am Rohr (3) angreifenden Zähnen (26) mehrere Einschnitte (24) aufweist, die von der Öffnung (22)

Hewlett-Packard GmbH
Int. Az.: EP 90                    -15 -

der Tellerfeder (8) für das Rohr (3) im wesentlichen radial nach außen verlaufen.

3. Kupplungsstück nach Anspruch 2, gekennzeichnet durch eine zwischen dem Dichtring (5) und der Tellerfeder (8) anzuordnende Metallscheibe (7).

4. Kupplungsstück nach einem der Ansprüche 1 bis 4, gekennzeichnet durch eine zwischen der Tellerfeder (8) und der Schraubeinrichtung (10) anzuordnende Metallscheibe (9).

5. Kupplungsstück nach einem der Ansprüche 1 bis 5, dadurch gekennzeichnet, daß der Dichtring (5) aus Polytetrafluoräthylen mit perfluorierten Alkoxyseitenketten besteht.

Fig.1

0205170

Fig.2

Fig.3

Fig.4

SCHNITT A-A

Fig.5 A

Fig.5 B

0205170

Fig.5 C

Fig.6